# FASCICULE DE BREVET EUROPEEN

(11) **EP 0 950 957 B1**
(45) Date de publication et mention de la délivrance du brevet: **21.11.2007**
(21) Numéro de dépôt: 99400912.4
(22) Date de dépôt: 14.04.1999
(51) Int. Cl.: G06F 12/02

(54) **Procédé pour accéder indifféremment en mode d'adressage physique et en mode d'adressage virtuel à une même zone mémoire de machine de traitement numérique et machine mettant en oeuvre ce procédé**
Verfahren zum willkürlichen Zugriff auf einen Speicherbereich einer digitalen Verarbeitungsvorrichtung in einem physikalischen Adressierungsmodus und einem virtuellen Adressierungsmodus und Vorrichtung zur Durchführung des Verfahrens
Method for indiscriminately accessing the same memory zone of a digital processing apparatus in a physical addressing mode and a virtual addressing mode and apparatus implementing this method

(30) Priorité: 15.04.1998 FR 9804692
(43) Date de publication de la demande: 20.10.1999
(73) Titulaire: BULL S.A., 78430 Louveciennes (FR)
(72) Inventeur: Bouraoui, Nadia, 38320 Eybens (FR); Mazzilli, Jean-Pascal, 38320 Eybens (FR); Sorace, Jean Dominique, 38190 Lancey (FR)

(56) Documents cités:
- EP-A- 0 566 421
- US-A- 4 279 014
- US-A- 4 951 194
- US-A- 5 274 811

## Description

La présente invention concerne un procédé pour accéder en mode d'adressage physique à une zone mémoire de machine de traitement numérique accessible en mode d'adressage virtuel. La présente invention concerne aussi une machine de traitement numérique comprenant une zone mémoire accessible en mode d'adressage physique et en mode d'adressage virtuel.

Le mode d'adressage virtuel permet d'allouer à un processus en cours d'exécution sur la machine, un ou plusieurs segments de mémoire virtuelle dans un espace d'adressage virtuel. Un segment de mémoire virtuelle est traditionnellement constitué de pages de taille fixe accessibles chacune au moyen d'un numéro de page logique. Lorsqu'une zone mémoire de la machine est accessible au moyen d'adresses virtuelles constituées chacune d'un numéro de page logique et d'une adresse relative, un numéro de page physique donné correspond, pendant l'accès, au numéro de page logique considéré. L'adresse relative est ce qui précise l'adresse à l'intérieur d'une page logique. La page physique est de taille identique à celle de la page virtuelle. L'accès réel à la zone mémoire de la machine est fait au moyen d'un mécanisme connu qui traduit l'adresse virtuelle en une adresse physique constituée du numéro de page physique et de l'adresse relative. L'intérêt d'un espace d'adressage virtuel est qu'il représente une potentialité d'adressage disponible pour un processus (process en anglais) ou une tâche (thread en anglais) de ce processus sans qu'il soit besoin de se préoccuper de l'existence réelle d'une page physique en mémoire ni de l'emplacement en mémoire physique de cette page si elle existe. La correspondance entre numéro de page logique et numéro de page physique étant généré par un accès effectif du processus à l'adresse virtuelle, deux numéros de page logique contigus ne correspondent pas nécessairement à deux numéros de page physique contigus en mémoire physique.

Le mode d'adressage physique permet à un processus ou à une tâche de ce processus d'accéder directement à la mémoire physique sans utiliser le mécanisme pour traduire une adresse virtuelle en adresse physique, tel que précédemment cité. Ce mode d'adressage est particulièrement utile pour certaines fonctions du système d'exploitation de la machine. Par exemple, le mécanisme précédemment cité peut utiliser le mode d'adressage physique.

Une zone mémoire nécessaire à l'exécution d'un processus, peut couvrir plus d'une page physique de la machine. La zone mémoire peut être destinée par exemple à contenir du code d'instructions exécutables ou des données telles que celles d'une pile, d'un tampon ou d'un tableau. Pour accéder à la zone mémoire, le processus effectue des calculs d'adresses nécessités par la lecture d'une ligne d'instruction suivant une instruction en cours ou d'une ligne d'instruction définie par un branchement dans le cas où la zone mémoire contient du code d'instructions exécutables, le processus effectue encore des calculs d'adresses nécessités par la lecture ou l'écriture d'une donnée suivant une donnée précédemment traitée, ou d'une donnée située à une distance fixée d'une donnée précédemment traitée.

En mode d'adressage virtuel, ces calculs sont effectués sur des adresses logiques. La zone mémoire est accédée au moyen de numéros de page logiques formant une suite continue. De la sorte, le calcul d'une nouvelle adresse suivant une adresse courante s'effectue de façon simple en ajoutant un nombre entier à l'adresse courante. Le cas où la nouvelle adresse est constituée d'un numéro de page logique différent de celui de l'adresse courante ne pose pas de problème particulier. Il importe peu que les pages physiques accédées dans la zone mémoire, constituent un ensemble fragmenté. C'est le mécanisme de gestion de l'espace d'adressage virtuel qui se charge de faire une correspondance appropriée entre numéro de page logique et numéro de page physique.

Cependant, un problème se pose en mode d'adressage physique de la zone mémoire si les numéros de page physiques qui la couvrent ne constituent pas une suite continue. En effet, une simple addition sur une adresse courante risque de générer un numéro de page physique non allouée à la zone mémoire. D'autre part, le mécanisme de gestion de l'espace d'adressage virtuel fait généralement que les numéros de page physiques alloués à la zone mémoire se modifient au cours de l'exécution des différents processus sur la machine.

Une solution habituelle est de réserver une zone mémoire accessible en mode d'adressage physique dés le démarrage de la machine en réservant une suite continue de numéros de pages physiques cloutées, c'est à dire dont l'attribution ne pourra pas être modifiée par le mécanisme d'adressage virtuel en cours de fonctionnement de la machine.

La solution habituelle présente de nombreux inconvénients. Les numéros de page physiques réservés amoindrissent les possibilités du mécanisme de gestion de mémoire virtuelle pour faire correspondre des numéros de page physiques à des numéros de page logiques. Des difficultés apparaissent pour définir en mode d'adressage virtuel, une zone mémoire accessible en mode d'adressage physique, à un instant quelconque de fonctionnement de la machine car le mécanisme de gestion d'espace d'adressage virtuel risque fortement de faire correspondre aux numéros de pages logiques des numéros de page physiques ne constituant pas une suite continue. EP-A-0566421 divulgue des pointeurs aux adresses virtuelles et physiques contenus dans une structure dédiée dans la mémoire.

Pour palier les inconvénients précédemment cités, l'invention propose un procédé pour accéder en mode d'adressage physique à une zone mémoire de machine de traitement numérique accessible en mode d'adressage virtuel au moyen d'adresses virtuelles constituées chacune d'un numéro de page logique et d'une adresse relative, à un numéro de page logique considéré correspondant un numéro de page physique donné et à un numéro de page logique contigu au numéro de page logique considéré, correspondant un autre numéro de page physique non nécessairement contigu au dit numéro de page physique donné, caractérisée en ce qu'il consiste à écrire à l'adresse constituée du numéro de page logique considéré et d'une adresse relative de première valeur déterminée, ledit autre numéro de page physique.

Il est ainsi possible d'accéder indifféremment en mode d'adressage physique et en mode d'adressage virtuel à une même zone mémoire de machine de traitement numérique.

Selon un mode particulier de mise en oeuvre, le procédé est caractérisé en ce que chaque incrémentation d'une ancienne adresse courante produisant une nouvelle adresse relative, provoque une comparaison de la nouvelle adresse relative avec la première valeur déterminée d'adresse relative et génère une nouvelle adresse courante de sorte que:
- la nouvelle adresse courante est constituée du numéro de page logique considéré pour le mode d'adressage virtuel, du numéro de page physique correspondant pour le mode d'adressage physique et de la nouvelle adresse relative produite si la nouvelle adresse relative est inférieure à l'adresse relative de première valeur déterminée,
- la nouvelle adresse courante est constituée d'un numéro de page logique contigu au numéro de page logique considéré pour le mode d'adressage virtuel, du dit autre numéro de page physique pour le mode d'adressage physique et d'une adresse relative de deuxième valeur déterminée si la nouvelle adresse relative est supérieure ou égale à l'adresse relative de première valeur déterminée.

Les dessins annexés illustrent l'invention :
La figure 1 rappelle brièvement le fonctionnement d'un adressage virtuel segmenté, dont les termes peuvent être utiles à l'explication de l'invention en référence aux figures qui suivent.
La figure 2 montre une zone mémoire mettant en oeuvre l'invention.
Les figures 3 et 4 montrent une machine mettant en oeuvre l'invention.

En référence à ces dessins, on nomme adresse effective EA, une entité logique 113 comprenant essentiellement trois champs STE, SPN et SPRA. Le champ STE contient un nombre i de bits pour coder une entrée de table de segments 106 constituée de 2ⁱ registres. Par exemple, la table 106 contient seize registres si la valeur de i est de quatre. Chaque registre est destiné à contenir un nombre m de bits pour référencer un identificateur de segment SD. Ceci permet de segmenter un espace d'adressage en 2^{m} segments de mémoire virtuelle. Par exemple, l'identificateur SD permet de distinguer seize méga-segments si la valeur de m est de vingt-quatre. Le préfixe méga est à prendre ici au sens informatique du terme, c'est à dire valant mille vingt-quatre kilo, le kilo valant lui-même mille vingt-quatre unités. Le champ SPN contient un nombre j de bits pour coder un numéro de page dans un segment. Un segment peut alors contenir 2^{j} pages distinctes de mémoire virtuelle, par exemple soixante-quatre kilo-pages si la valeur de j est de seize. Le champ SPRA contient un nombre k de bits pour coder une adresse relative de multiplet, au sein d'une page, le multiplet étant la plus petite entité de données informatiques, généralement de huit ou neuf bits, adressable par le système. Une page peut alors contenir 2^{k} multiplets informatiques, par exemple quatre kilo-multiplets si la valeur de k est de douze.

Une concaténation d'identificateur de segment SD et de numéro de page SPN donne un numéro de page logique LPN 107. Il est alors possible de référencer 2^{m+j} pages logiques distinctes, soit par exemple un téra-pages si la valeur de m+j est de quarante. En adressant les multiplets de chaque page au moyen du champ SPRA, il est possible d'obtenir ainsi un espace d'adressage virtuel de quatre peta-multiplets, les préfixes téra et péta étant à prendre au sens informatique des termes.

Une table de pages logiques LPT 110 permet de faire correspondre un numéro de page physique PPN à un numéro de page logique LPN donné. En concaténant le numéro de page physique PPN à une adresse relative PRA dans la page ainsi référencée, on obtient une adresse physique 112 de multiplet. L'adresse relative PRA est une recopie directe du champ SPRA. Si par exemple, le numéro de page physique est codé sur vingt bits, il est possible d'obtenir une adresse physique codée sur trente-deux bits pour accéder à une mémoire physique de quatre méga-multiplets.

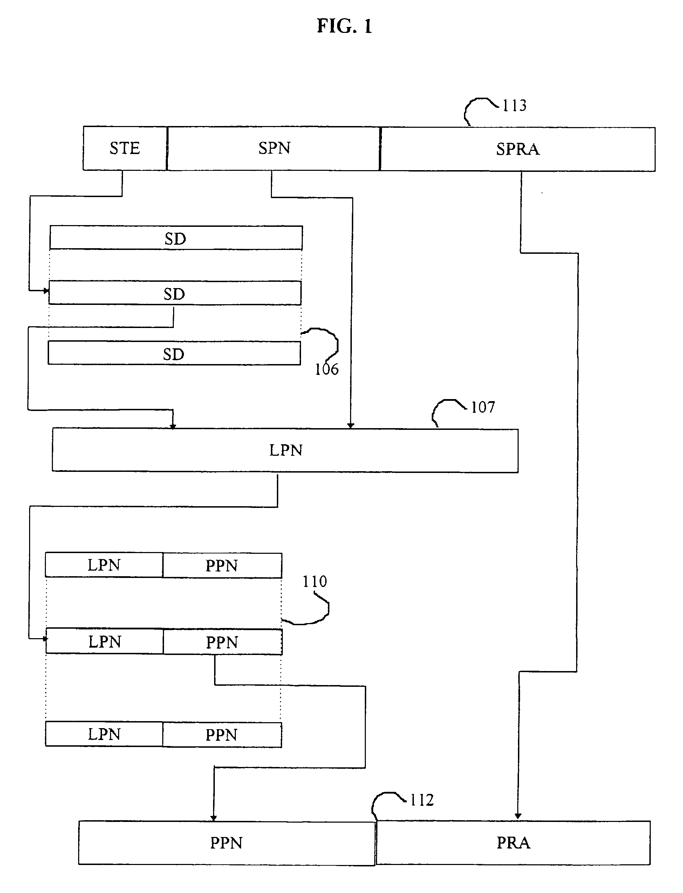

Parmi les différents mécanismes possibles d'exploitation de la table 110, on peut citer celui du brevet US4279014 de J-C. Cassonnet et al. dont certaines références de la figure 1 sont volontairement reprises dans la présente description en référence à cette figure.

L'adressage virtuel permet d'obtenir un espace d'adressage considérablement plus grand que l'espace d'adressage physique disponible. L'homme du métier connaît encore d'autres avantages tels que celui de faciliter l'édition dynamique de liens à l'exécution de programmes.

La taille considérable de l'espace d'adressage virtuel fait qu'à un instant donné, une page logique de numéro LPN n'est pas nécessairement référencée dans la table LPT. Il se peut cependant qu'il existe une page physique de numéro PPN en mémoire physique, apte à correspondre à la page logique de numéro LPN.

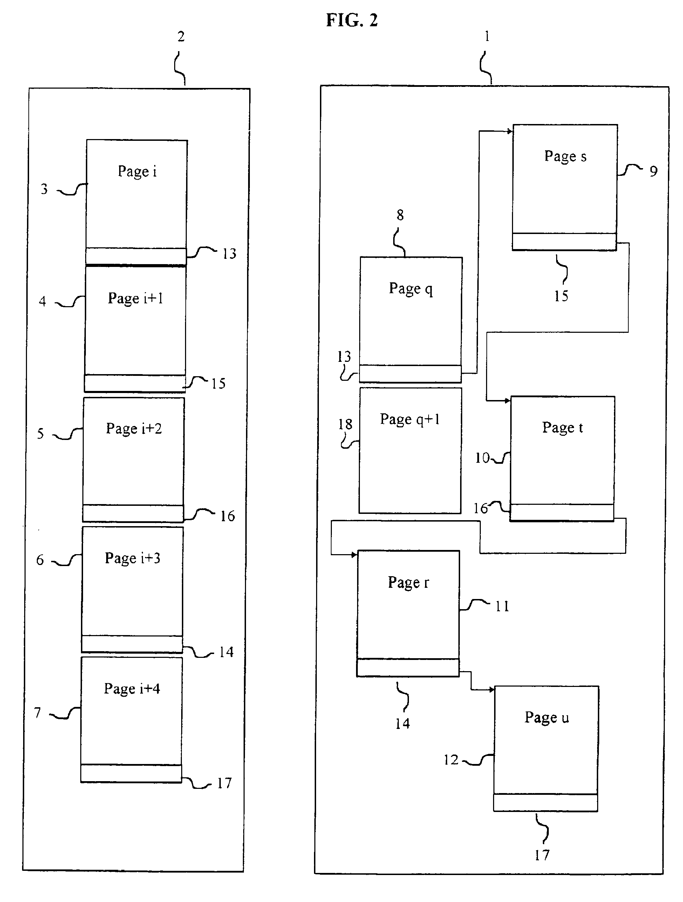

En référence à la figure 2, la mémoire physique 1 d'une machine informatique est accessible en mode d'adressage virtuel au moyen d'un espace logique 2. Un processus définit dans l'espace logique 2, une zone mémoire constituée par exemple de pages 3 à 7 ayant des numéros de page logiques contigus i, i+1, i+2, i+3, i+4. Les pages 3 à 7 sont représentées physiquement en mémoire physique 1, respectivement par des pages 8 à 12. Les numéros de page physique q, s, t, r, u respectifs des pages 8 à 12 ne sont pas nécessairement contigus car la table 110 fait correspondre à chaque numéro de page logique un numéro de page physique en fonction des numéros de page physique q, r, s, t, u disponibles au moment où la correspondance est établie.

Les correspondances entre numéros de pages logiques i, i+1, i+2, i+3, i+4 et les numéros de page physiques q, s, t, r, u sont figées pour éviter que les numéros de page physiques q, r, s, t, u puissent correspondre à d'autres numéros de pages logiques tant que la machine exécute des processus utilisant la zone mémoire.

Suivant l'exemple de la figure 2, la page 3 de l'espace d'adressage virtuel 2 a pour représentation physique la page 8 en mémoire 1 de la machine. Le numéro de page physique q correspond au numéro de page logique i dans la table 110. La page 4 de l'espace d'adressage virtuel 2 a pour représentation physique la page 9 en mémoire 1 de la machine. Le numéro de page physique s correspond au numéro de page logique i+1 dans la table 110.

Lorsqu'un processus exécuté par un processeur en mode d'adressage virtuel, passe de la page 3 à la page 4, il lui suffit d'incrémenter le numéro de page logique. Par contre, un processus exécuté par un processeur en mode d'adressage physique ne peut passer de la page 8 à la page 9 par simple incrémentation du numéro de page physique q car il adresserait alors une page 18 de numéro de page physique q+1 qui ne correspond pas nécessairement à la page 4.

Un procédé conforme à l'invention consiste à écrire le numéro de page physique s à l'adresse constituée du numéro de page logique i et d'une adresse relative 13 de valeur déterminée. Par le mécanisme de correspondance, le numéro de page physique s se retrouve donc à l'adresse relative 13 de la page 8.

Ainsi, un processus exécuté par un processeur en mode d'adressage physique, peut passer de la page 8 à la page 9 en lisant au préalable à l'adresse relative 13 de la page 8, le numéro de page physique s qui y est contenu. L'adresse relative 13 étant de valeur déterminée, le processus sera programmé de façon à avoir connaissance de cette valeur déterminée.

La zone mémoire représentée en figure 2 étant constituée des pages 3 à 7 dans l'espace d'adressage virtuel 2, il est intéressant d'écrire les numéros de page physiques t, r, u respectivement à l'adresse constituée du numéro de page logique i+1, i+2, i+3 et d'une adresse relative 15, 16, 14 de valeur déterminée. Par le mécanisme de correspondance, les numéros de page physiques t, r, u se retrouvent donc respectivement à l'adresse relative 15 de la page 9, à l'adresse relative 16 de la page 10 et à l'adresse relative 14 de la page 11. Suivant l'usage auquel la zone mémoire est destinée, on peut prévoir d'écrire à l'adresse constituée du numéro de page logique i+4 et d'une adresse relative 17 de valeur déterminée, un indicateur de fin de zone mémoire pour un usage purement séquentiel, le numéro de page physique q pour un usage à accès circulaire ou aléatoire de la zone mémoire ou ne rien y écrire, aucune page ne succédant à la page 7 en mode d'adressage virtuel ou à la page 12 en mode d'adressage physique. Bien entendu, l'accès en mode d'adressage physique à la zone mémoire par un processus est facilité si toutes les adresses relatives 13 à 16 ou 17 sont de même valeur déterminée.

Certains processus utilisent une zone mémoire par incrémentations successives d'adresses dans la zone mémoire. C'est le cas par exemple de processus exécutant des lignes de code séquentiel sans branchement. C'est encore le cas par exemple de processus remplissant ou vidant une zone mémoire attribuée à un tampon, une pile ou un tableau.

Le procédé selon l'invention offre un avantage supplémentaire pour ce type particulier de processus lorsque chaque incrémentation d'une ancienne adresse courante de numéro de page logique i ou de numéro de page physique q produisant une nouvelle adresse relative, provoque une comparaison de la nouvelle adresse relative avec la première valeur déterminée d'adresse relative 13 et génère une nouvelle adresse courante de sorte que:
- la nouvelle adresse courante est constituée du numéro de page logique i considéré pour le mode d'adressage virtuel, du numéro de page physique q correspondant pour le mode d'adressage physique et de la nouvelle adresse relative produite si la nouvelle adresse relative est inférieure à l'adresse relative 13 de première valeur déterminée,
- la nouvelle adresse courante est constituée d'un numéro de page logique i+1 contigu au numéro de page logique i considéré pour le mode d'adressage virtuel, de l'autre numéro de page physique s pour le mode d'adressage physique et d'une adresse relative de deuxième valeur déterminée si la nouvelle adresse relative est supérieure ou égale à l'adresse relative 13 de première valeur déterminée.

En prenant pour deuxième valeur déterminée, une valeur nulle, la nouvelle adresse courante accède au début de la page suivante dès qu'elle atteint la première valeur déterminée de l'adresse 13.

En prenant pour première valeur déterminée celle de la dernière adresse accessible de la page courante, on utilise alors, dans une page, et avant de passer à la page suivante, la totalité des multiplets qui la constituent moins ceux nécessaires au stockage du numéro de page physique suivant.

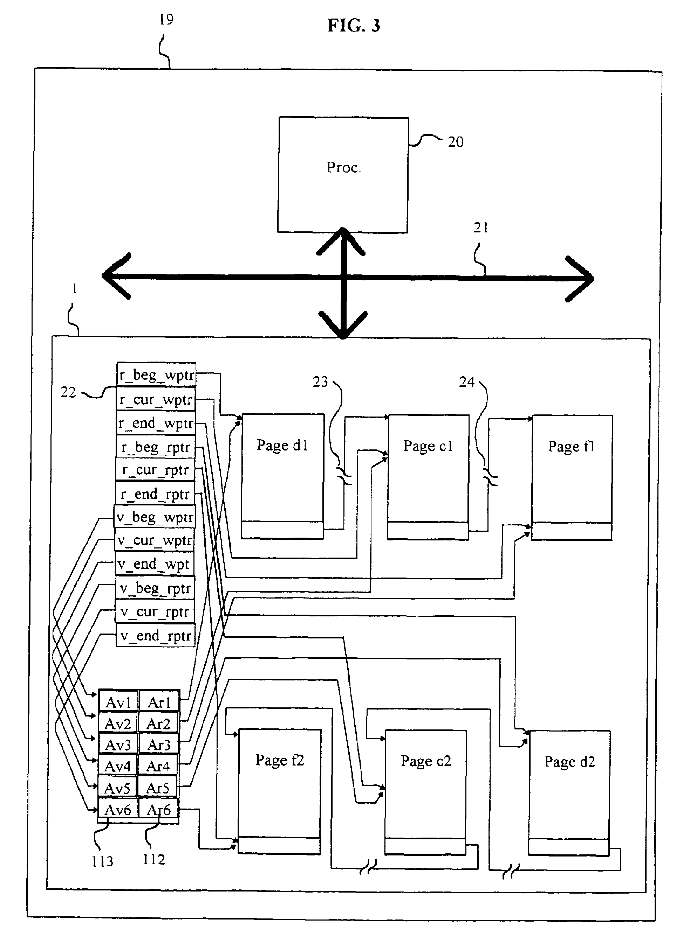

En référence à la figure 3, une machine 19 comprend un ou plusieurs processeurs 20 accédant à la mémoire 1 de la machine au moyen d'un bus système 21.

A titre d'exemple non limitatif, une zone mémoire est constituée, dans la mémoire 1, de deux séries de pages réalisant chacune un tampon dans lequel le processeur 20 puisse écrire ou lire des données à la suite les unes des autres. Le premier tampon est constitué de pages de numéros de page physiques d1 à f1 parmi lesquels le numéro de page physique c1 est celui de la page courante accédée en lecture ou en écriture par le processeur 20. Le numéro c1 peut prendre une valeur quelconque parmi celles définies par un chaînage semblable à celui décrit en référence à la figure 2, y compris les numéros d 1 ou f1, la page c1 étant alors confondue avec la page d1 ou respectivement f1. Une coupure 23 sur le chaînage de la fin de la page de numéro d1 au début de la page de numéro c1 représente le fait qu'un nombre quelconque de pages peuvent être chaînées entre ces deux pages, y compris que ces pages puissent être confondues. Une coupure 24 sur le chaînage de la fin de la page de numéro c1 au début de la page de numéro f1 représente le fait qu'un nombre quelconque de pages peuvent être chaînées entre ces deux pages, y compris que ces pages puissent être confondues.

De même le deuxième tampon est constitué de pages de numéros de page physiques d2 à f2 parmi lesquels le numéro de page physique c2 est celui de la page courante accédée en lecture ou en écriture par le processeur 20.

Un bloc de contrôle 22 est contenu dans une page spécialement affectée à la zone mémoire, distincte des autres pages précédemment décrites de cette zone. Le bloc de contrôle 22 contient entre autres douze pointeurs.

Un pointeur r_beg_wptr contient une adresse réelle Ar1 de début, un pointeur r_end_wptr contient une adresse réelle Ar3 de fin et un pointeur r_cur_wptr contient une adresse réelle Ar2 courante de tampon pour accéder en écriture à ce tampon en mode d'adressage physique.

Un pointeur r_beg_rptr contient une adresse réelle Ar4 de début, un pointeur r_end_rptr contient une adresse réelle Ar6 de fin et un pointeur r_cur_rptr contient une adresse réelle Ar5 courante de tampon pour accéder en lecture à ce tampon en mode d'adressage physique.

Un pointeur v_beg_wptr contient une adresse effective Av1 de début, un pointeur v_end_wptr contient une adresse effective Av3 de fin et un pointeur v_cur_wptr contient une adresse effective Av2 courante de tampon pour accéder en écriture à ce tampon en mode d'adressage virtuel.

Un pointeur v_beg_rptr contient une adresse effective Av4 de début, un pointeur v_end_rptr contient une adresse effective Av6 de fin et un pointeur v_cur_rptr contient une adresse effective Av5 courante de tampon pour accéder en lecture à ce tampon en mode d'adressage virtuel.

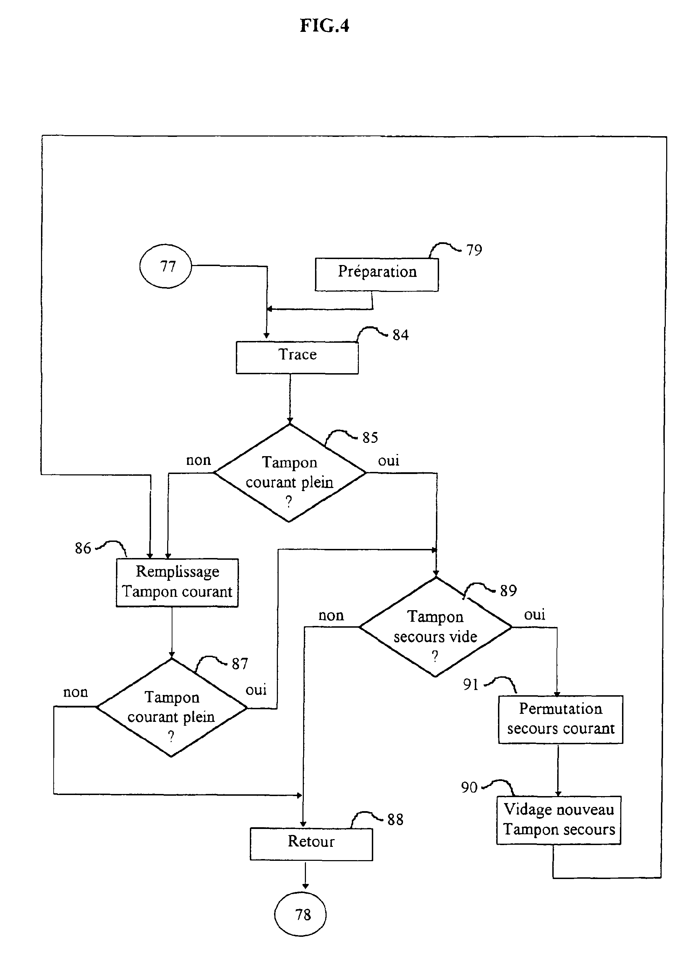

Le mécanisme d'adressage virtuel tel que décrit en référence à la figure 1 fait correspondre à chaque adresse effective 113 de valeur Av1 à Av6, une adresse réelle 112 de valeur respective Ar1 à Ar6. Une mise en oeuvre, telle que décrite en référence à la figure 4, du procédé selon l'invention permet de faire que les adresses réelles Ar1, Ar2, Ar3, Ar4, Ar5, Ar6 soient identiques aux valeurs contenues respectivement dans les pointeurs r_beg_wptr, r_cur_wptr, r_end_wptr, r_beg_rptr, r_cur_rptr, r_end_rptr.

La mise en oeuvre du procédé en référence à la figure 4, est particulièrement utile pour des remplissages et purges alternées sur deux tampons par des processus exécutés par des processeurs tant en mode d'adressage physique qu'en mode d'adressage virtuel. Cette mise en oeuvre est par exemple utile pour effectuer une trace 84 d'événement intervenant dans l'exécution de processus par la machine. La trace 84 est activée à chaque instruction 77 générée par un processus.

Une étape de préparation 79 sert à définir deux tampons pour contenir temporairement les événements tracés avant de les stocker sur une mémoire de masse de la machine. Une zone mémoire de 2n pages est réservée en mode d'adressage virtuel. Le mode d'adressage virtuel pour la réservation des 2n pages est préconisé car l'étape 79 est effectuée en cours de fonctionnement de la machine et les pages réservées seront physiquement prises dans la mémoire 1 au moyen du mécanisme d'adressage virtuel parmi les pages disponibles, éventuellement dispersées dans la mémoire 1. Un nombre n de pages est destiné à un tampon courant et un nombre n de pages est destiné à un tampon de secours. Les pages ainsi réservées sont cloutées jusqu'à leur libération. La libération des pages se fait par exemple lorsqu'on ne veut plus tracer d'événements.

Toujours en mode d'adressage virtuel dans l'étape 79, le bloc de contrôle 22 est créé. Une adresse Av1 de début de tampon courant est écrite dans le pointeur v_beg_wptr et dans le pointeur v_cur_wptr. Une adresse Av3 de fin de tampon courant est écrite dans le pointeur v_end_wptr. La différence entre les valeurs d'adresse Av1 et Av3 est sensiblement égale à n fois le contenu d'une page. Une adresse Av4 de début de tampon de secours est écrite dans le pointeur v_beg_rptr et dans le pointeur v_cur_rptr. Une adresse Av6 de fin de tampon de secours est écrite dans le pointeur v_end_rptr. La différence entre les valeurs d'adresse Av4 et Av6 est sensiblement égale à n fois le contenu d'une page. Les adresses physiques, encore appelées adresses réelles Ar1, Ar3, Ar4, Ar6 correspondant respectivement aux adresses du mode d'adressage virtuel Av1, Av3, Av4, Av6 sont calculées à partir de la table de correspondance 110, en référence à la figure 1. Les adresses Ar1, Ar3, Ar4, Ar6 sont écrites respectivement dans les pointeurs r_beg_wptr et r_cur_wptr, r_end_wptr, r_beg_rptr et r_cur_rptr, r_end_rptr.

Ainsi, le tampon courant est initialisé par les pointeurs v_beg_wptr, v_cur_wptr, r_beg_wptr et r_cur_wptr qui pointent vers le début de la page d1, indirectement pour les deux premiers et directement pour les deux derniers, et par les pointeurs v_end_wptr et r_end_wptr qui pointent vers la fin de la page f1, indirectement pour le premier et directement pour le deuxième. De même, le tampon de secours est initialisé par les pointeurs v_beg_rptr, v_cur_rptr, r_beg_rptr et r_cur_rptr qui pointent vers le début de la page d2, indirectement pour les deux premiers et directement pour les deux derniers, et par les pointeurs v_end_rptr et r_end_rptr qui pointent vers la fin de la page f2, indirectement pour le premier et directement pour le deuxième.

Toujours dans l'étape 79 en mode d'adressage virtuel, une lecture de la table 110 permet de connaître chaque numéro de page physique PPN correspondant à un numéro de page logique LPN des tampons courant et de secours initialisés. Au numéro de page logique LPN de la première page du tampon courant, succède un numéro de page logique LPN+1 auquel correspond dans la table 110 un numéro de page physique PPN(LPN+1). Une adresse constituée du numéro PPN(LPN+1) et d'une adresse relative nulle est écrite à la fin de la page de numéro de page logique LPN. La fin de la page est définie par une adresse de valeur déterminée telle que, par exemple celle du dernier multiplet de la page, diminuée du nombre de multiplets qu'il est prévu d'écrire par paquet dans le tampon courant. L'opération précédente est répétée pour chaque page de numéro LPN+i jusqu'à i=n-1, telle que PPN(LPN+n-1)=f1. Les mêmes opérations sont effectuées pour les pages du tampon de secours.

Suite à l'étape 84, une étape 85 teste si le tampon courant est plein. Le test s'effectue en mode d'adressage physique comme en mode d'adressage virtuel par lecture du pointeur v_cur_wptr et du pointeur v_end_wptr. Si la valeur du pointeur v_cur_wptr est strictement inférieure à la valeur du pointeur v_end_wptr, le tampon courant n'est pas plein et une étape 86 est activée. Sinon, le tampon courant est plein et une étape 89 est activée.

Dans l'étape 86, un remplissage du tampon courant est effectué par écriture d'un paquet de données à l'adresse contenue dans le pointeur v_cur_wptr en mode d'adressage virtuel ou à l'adresse contenue dans le pointeur r_cur_wptr en mode d'adressage physique. Une valeur correspondante à la taille des données écrites en terme d'adresses, est ajoutée au contenu des pointeurs v_cur_wptr et r_cur_wptr. Si la partie adresse relative du contenu du pointeur v_cur_wptr ou du contenu du pointeur r_cur_wptr atteint ou dépasse la partie adresse relative de l'adresse de valeur déterminée (fin de la page), la partie adresse relative du contenu des deux pointeurs est remplacée par une valeur nulle, la partie numéro de page logique du contenu du pointeur v_cur_wptr est incrémentée d'une unité et la partie numéro de page physique du contenu du pointeur r_cur_wptr est remplacée par le numéro de page physique PPN contenu à l'adresse de valeur déterminée. Comme en fin d'étape 79, les pointeurs v_cur_wptr et r_cur_wptr pointaient respectivement en mode d'adressage virtuel et en mode d'adressage physique vers un même multiplet en début de page d1, à chaque activation de l'étape 86, les pointeurs v_cur_wptr et r_cur_wptr pointent respectivement en mode d'adressage virtuel et en mode d'adressage physique vers un même multiplet d'une page courante c1.

Suite à l'étape 86, une étape 87 teste si le tampon courant est plein. Le test s'effectue en mode d'adressage physique comme en mode d'adressage virtuel par lecture du pointeur v_cur_wptr et du pointeur v_end_wptr. Si la valeur du pointeur v_cur_wptr est strictement inférieure à la valeur du pointeur v_end_wptr, le tampon courant n'est pas plein et une étape 88 est activée. Sinon, le tampon courant est plein et l'étape 89 est activée.

L'étape 88 retourne vers l'instruction suivante 78 du processus en cours d'exécution.

L'étape 89 teste si le tampon de secours est vide. Le test s'effectue en mode d'adressage physique comme en mode d'adressage virtuel par lecture du pointeur v_cur_rptr et du pointeur v_beg_rptr. Si la valeur du pointeur v_cur_rptr est égale à la valeur du pointeur v_beg_rptr, le tampon de secours est vide et une étape 91 est activée. Sinon, le tampon de secours n'est pas vide et l'étape 88 est activée.

L'étape 91 fait une permutation entre tampon de secours et tampon courant en remplaçant le contenu des pointeurs r_cur_wptr et v_cur_wptr respectivement par le contenu des pointeurs r_beg_wptr et v_beg_wptr, puis le contenu des pointeurs r_beg_wptr, r_cur_wptr et r_end_wptr respectivement par le contenu des pointeurs r_beg_rptr, r_cur_rptr et r_end_rptr et réciproquement, et en remplaçant le contenu des pointeurs v_beg_wptr, v_cur_wptr et v_end_wptr respectivement par le contenu des pointeurs v_beg_rptr, v_cur_rptr et v_end_rptr et réciproquement.

Après chaque passage dans l'étape 91, ce qui était le tampon de secours dans l'étape 89 devient le nouveau tampon courant et ce qui était le tampon courant devient le nouveau tampon de secours. Après plusieurs passages dans l'étape 91, l'état de la machine 19 est par exemple celui présenté en figure 3, dans laquelle le nouveau tampon de secours est constitué de pages d2,...,c2,...,f2. A l'étape 91 succède une étape 90.

Dans l'étape 90, un vidage du tampon de secours est activé de façon asynchrone, c'est à dire qu'une fois activé le vidage est réalisé en parallèle, indépendamment du déroulement des étapes de la figure 4. Le vidage a toujours lieu en mode d'adressage virtuel : il est effectué par lecture d'un paquet de données à l'adresse contenue dans le pointeur v_cur_rptr initialement égal au contenu du pointeur v_beg_rptr, puis écriture de ce paquet de données sur une mémoire de masse. Ceci est répété après les actions qui suivent, jusqu'à ce que le contenu du pointeur v_cur_rptr soit égal au contenu du pointeur v_end_rptr. Une valeur correspondante à la taille des données lues en terme d'adresses, est ajoutée au contenu du pointeur v_cur_rptr. Si la partie adresse relative du contenu du pointeur v_cur_rptr atteint ou dépasse la partie adresse relative de l'adresse de valeur déterminée (fin de la page), la partie adresse relative du contenu du pointeur est remplacée par une valeur nulle, la partie numéro de page logique du contenu du pointeur v_cur_rptr est incrémentée d'une unité. En fin d'étape 90, les pointeurs v_cur_rptr et r_cur_rptr sont mis à jour respectivement avec le contenu des pointeurs v_beg_rptr et r_beg_rptr. Ils pointent ainsi respectivement en mode d'adressage virtuel et en mode d'adressage physique vers un même multiplet en début de page d2.
A la suite de l'activation du vidage en étape 90, l'étape 86 est activée de façon à écrire le paquet de données procuré par l'étape 84, dans le nouveau tampon courant.

## Revendications

1. Procédé pour accéder en mode d'adressage physique à une zone mémoire de machine de traitement numérique (19) accessible en mode d'adressage virtuel au moyen d'adresses virtuelles constituées chacune d'un numéro de page logique (LPN) et d'une adresse relative (SPRA), à un numéro de page logique considéré (i) correspondant un numéro de page physique donné (q) et à un numéro de page logique contigu (i+1) au numéro de page logique considéré (i), correspondant un autre numéro de page physique (s) non nécessairement contigu au dit numéro de page physique donné (q), **caractérisé en ce qu'**il consiste à écrire à l'adresse constituée du numéro de page logique considéré (i) et d'une adresse relative de première valeur déterminée, ledit autre numéro de page physique (s).

2. Procédé pour accéder en mode d'adressage physique à une zone mémoire de machine de traitement numérique (19) selon la revendication 1, **caractérisé en ce que** chaque incrémentation d'une ancienne adresse courante produisant une nouvelle adresse relative, provoque une comparaison de la nouvelle adresse relative avec la première valeur déterminée d'adresse relative et génère une nouvelle adresse courante de sorte que:
- la nouvelle adresse courante est constituée du numéro de page logique considéré (i) pour le mode d'adressage virtuel, du numéro de page physique correspondant (q) pour le mode d'adressage physique et de la nouvelle adresse relative produite si la nouvelle adresse relative est inférieure à l'adresse relative de première valeur déterminée,
- la nouvelle adresse courante est constituée d'un numéro de page logique contigu (i+1) au numéro de page logique considéré (i) pour le mode d'adressage virtuel, du dit autre numéro de page physique (s) pour le mode d'adressage physique et d'une adresse relative de deuxième valeur déterminée si la nouvelle adresse relative est supérieure ou égale à l'adresse relative de première valeur déterminée.

3. Procédé pour accéder en mode d'adressage physique à une zone mémoire de machine de traitement numérique (19) selon la revendication 1 ou 2, **caractérisé en ce qu'**il consiste à mémoriser dans un bloc de contrôle (22) de ladite zone mémoire une adresse effective (Av1) plus une adresse physique correspondante (Ar1) de début de zone mémoire, une adresse effective (Av2) plus une adresse physique correspondante (Ar2) courantes dans la zone mémoire et une adresse effective (Av3) plus une adresse physique (Ar3) correspondante de fin de zone mémoire.

4. Machine de traitement numérique (19) comprenant une zone mémoire accessible au moyen d'adresses virtuelles constituées chacune d'un numéro de page logique (LPN) et d'une adresse relative (SPRA), à un numéro de page logique (i) considéré correspondant un numéro de page physique (q) donné et à un numéro de page logique (i+1) contigu au numéro de page logique considéré (i), correspondant un autre numéro de page physique (s) non nécessairement contigu au dit numéro de page physique donné (q), **caractérisée en ce que** ladite zone mémoire contient, à l'adresse constituée du numéro de page logique (i) considéré et d'une adresse relative de première valeur déterminée, ledit autre numéro de page physique (s).

5. Machine de traitement numérique selon la revendication 4, **caractérisée en ce qu'**elle comprend un bloc de contrôle (22) de ladite zone mémoire, contenant une adresse effective (Av1) et une adresse physique (Ar1) de début de zone mémoire, une adresse effective (Av2) et une adresse physique (Ar2) courantes dans la zone mémoire, une adresse effective (Av3) et une adresse physique (Ar3) de fin de zone mémoire.

## Claims

1. Method of accessing, in physical addressing mode, a memory zone of a digital processing machine (19) accessible in virtual addressing mode by means of virtual addresses each constituted by a logical page number (LPN) and a relative address (SPRA), a considered logical page number (i) corresponding to a given physical page number (q) and a logical page number (i+1) contiguous to the considered logical page number (i), corresponding to another physical page number (s) not necessarily contiguous to said given physical page number (q), **characterised in that** it consists in writing said other physical page number (s) at the address constituted by the considered logical page number (i) and by a first predetermined relative-address value:

2. Method of accessing, in physical addressing mode, a memory zone of a digital processing machine (19) according to Claim 1, **characterised in that** each incrementation of an old current address, producing a new relative address, causes a comparison between the new relative address and the first predetermined relative-address value and generates a new current address so that:
- the new current address is constituted by the considered logical page number (i) for the virtual addressing mode, by the corresponding physical page number (q) for the physical addressing mode, and by the new relative address produced if the new relative address is less than the first predetermined relative-address value,
- the new current address is constituted by a logical page number (i+1) contiguous to the considered logical page number (i) for the virtual addressing mode, by said other physical page number (s) for the physical addressing mode, and by a relative address of a second predetermined value if the new relative address is greater than or equal to the first predetermined relative-address value.

3. Method, of accessing, in physical addressing mode, a memory zone of a digital processing machine (19) according to Claim 1 or 2, **characterised in that** it consists in storing, in a control block (22) of said memory zone, an actual address (Av1) plus a corresponding physical start-of-memory-zone address (Ar1), an actual address (Av2) plus a corresponding physical address (Ar2), both current, in the memory zone and an actual address (Av3) plus a corresponding physical end-of-memory-zone address (Ar3).

4. Digital processing machine (19) comprising a memory zone accessible by means of virtual addresses each constituted by a logical page number (LPN) and a relative address (SPRA), a considered logical page number (i) corresponding to a given physical page number (q) and a logical page number (i+1) contiguous to the considered logical page number (i), corresponding to another physical page number (s) not necessarily contiguous to said given physical page number (q), **characterised in that** said memory zone contains, at the address constituted by the considered logical page number (i) and a relative first predetermined value address, said other physical page number (s).

5. Digital processing machine according to Claim 4, **characterised in that** it comprises a control block (22) of said memory zone, containing an actual address (Av1) and a physical start-of-memory-zone address (Ar1), an actual address (Av2) and a physical address (Ar2), both current, in the memory zone, an actual address (Av3) and a physical end-of-memory-zone address (Ar3).

## Patentansprüche

1. Verfahren, um in physikalischer Adressierungsbetriebsart zuzugreifen auf einen Speicherbereich einer Digitalverarbeitungsmaschine (19), auf den in virtueller Adressierungsbetriebsart mittels virtueller Adressen zugegriffen werden kann, von denen jede aus einer logischen Seitenzahl (LPN) und einer relativen Adresse (SPRA) gebildet ist, auf eine betrachtete logische Seitenzahl (i), die einer physikalischen Seitenzahl (q) entspricht und auf eine an die betrachtete logische Seitenzahl (i) angrenzende logische Seitenzahl (i+1), die einer anderen physikalischen Seitenzahl (s) entspricht, die nicht notwendigerweise an die genannte gegebene physikalische Seitennummer (q) angrenzt, **dadurch gekennzeichnet, daß** das Verfahren darin besteht, die genannte andere physikalische Seitenzahl (s) an die Adresse zu schreiben, die gebildet ist aus der betrachteten logischen Seitenzahl (i) und aus einer relativen Adresse eines ersten bestimmten Wertes.

2. Verfahren nach Anspruch 1, um in physikalischer Adressierungsbetriebsart auf einen Speicherbereich einer Digitalverarbeitungsmaschine (19) zuzugreifen, **dadurch gekennzeichnet, daß** jede Inkrementierung einer früheren laufenden Adresse, die eine neue relative Adresse erzeugt, einen Vergleich der neuen relativen Adresse mit dem ersten bestimmten relativen Adressenwert hervorruft und eine neue laufende Adresse erzeugt, dergestalt, daß:
- die neue laufende Adresse gebildet ist aus der betrachteten logischen Seitenzahl (i) für die virtuelle Adressierungsbetriebsart, aus der entsprechenden physikalischen Seitenzahl (q) für die physikalische Adressierungsbetriebsart und aus der neuen relativen Adresse, die erzeugt wird, falls die neue relative Adresse unter dem ersten bestimmten relativen Adressenwert liegt,
- die neue laufende Adresse gebildet ist aus einer logischen Seitenzahl (i+1), die angrenzt an die betrachtete logische Seitenzahl (i) für die virtuelle Adressierungsbetriebsart, aus der genannten anderen physikalischen Seitenzahl (s) für die physikalische Adressierungsbetriebsart und aus einer relativen Adresse eines zweiten bestimmten Wertes, falls die neue relative Adresse über oder gleich dem ersten bestimmten relativen Adressenwert ist.

3. Verfahren nach Anspruch 1 oder 2, um in physikalischer Adressierungsbetriebsart auf einen Speicherbereich einer Digitalverarbeitungsmaschine (19) zuzugreifen, **dadurch gekennzeichnet, daß** das Verfahren darin besteht, in einem Steuerblock (22) des genannten Speicherbereichs eine effektive Adresse (Av1) plus eine entsprechende physikalische Adresse (Ar1) des Speicherbereichanfangs, eine im Speicherbereich laufende effektive Adresse (Av2) plus eine entsprechende physikalische Adresse (Ar2) und eine effektive Adresse (Av3) plus eine entsprechende physikalische Adresse (Ar3) des Speicherbereichendes zu speichern.

4. Digitalverarbeitungsmaschine (19) umfassend einen Speicherbereich, auf den zugegriffen werden kann mittels virtueller Adressen, von denen jede gebildet ist aus einer logischen Seitenzahl (LPN) und einer relativen Adresse (SPRA), auf eine betrachtete logische Seitenzahl (i), die einer physikalischen Seitenzahl (q) entspricht und auf eine an die betrachtete logische Seitenzahl (i) angrenzende logische Seitenzahl (i+1), die einer anderen physikalischen Seitenzahl (s) entspricht, die nicht notwendigerweise an die genannte gegebene physikalische Seitennummer (q) angrenzt, **dadurch gekennzeichnet, daß** der Speicherbereich an der Adresse, die gebildet ist aus der betrachteten logischen Seitenzahl (i) und aus einer relativen Adresse eines ersten bestimmten Wertes, die genannte andere physikalische Seitenzahl (s) enthält.

5. Digitalverarbeitungsmaschine nach Anspruch 4, **dadurch gekennzeichnet, daß** sie einen Steuerblock (22) zum Steuern des Speicherbereichs umfaßt, enthaltend eine effektive Adresse (Av1) und eine physikalische Adresse (Ar1) des Speicherbereichanfangs, eine laufende effektive Adresse (Av2) und eine laufende physikalische Adresse (Ar2) im Speicherbereich, eine effektive Adresse (Av3) und eine physikalische Adresse (Ar3) des Speicherbereichendes.
